Europäisches Patentamt

European Patent Office

Office européen des brevets

(11) Publication number: **0 193 343 B1**

**EUROPEAN PATENT SPECIFICATION**

(45) Date of publication of patent specification: **16.08.90**

(21) Application number: **86301158.1**

(22) Date of filing: **19.02.86**

(51) Int. Cl.⁵: **B 41 J 2/315, G 01 D 15/10**

(54) **Thermal printer.**

(30) Priority: **25.02.85 JP 35808/85**

(43) Date of publication of application:
**03.09.86 Bulletin 86/36**

(45) Publication of the grant of the patent:
**16.08.90 Bulletin 90/33**

(84) Designated Contracting States:
**DE FR GB NL**

(56) References cited:
**DE-A-3 103 935**
**DE-A-3 241 768**
**JP-A-4 679 416**
**US-A-4 365 254**
**US-A-4 555 714**

(73) Proprietor: **TOKYO ELECTRIC CO., LTD.**
**6-13, 2-chome, Nakameguro**
**Meguro-ku Tokyo (JP)**

(72) Inventor: **Sakura, Yasuhiro**
**382 Umena Mishima**
**Shizuoka (JP)**
Inventor: **Ishikawa, Mamoru**
**66-5 Nakamaru**
**Fuji Shizuoka (JP)**
Inventor: **Nimura, Hitoshi**
**100-18 Tsukamoto Kannami-cho**
**Tagata Shizuoka (JP)**

(74) Representative: **Daley, Michael John et al**
**F.J. CLEVELAND & COMPANY 40/43 Chancery**
**Lane**
**London, WC2A 1JQ (GB)**

Courier Press, Leamington Spa, England.

**Description**

The present invention relates to a thermal printer for printing a multicolour image on a recording paper by means of a thermal printing head.

In general, the use of a thermal printing head in a label printer or the like has a number of significant advantages including capabilities for forming any desired print pattern and for achieving clear printing of a bar code. However, since the print colour on the label is uniform over the entirety thereof, when it is required to render some specific portion of the printed information conspicuous for the purpose of emphasis, such portion is customarily enclosed with a line or is printed in a thicker style. Although the above purpose can be achieved to a certain degree by such conventional means the effect actually obtained is such that while the emphasized portion is distinguished, it is not particularly eye catching and does not stand out from its surroundings.

Emphasis can be accomplished by using multicolour printing, but this, however, usually requires two or more thermal heads which serves to complicate the structure of the printing mechanism.

It is known from Japanese Patent Application 46-79416 to use a thermal head and to vary the intensity of heat in order to actuate different colour couplers which exist in different layers and which have different development temperatures.

It is also known from U.S. Patent 4,365,254 to print a dichromatic paper by using two thermal heads and a recording material which involves special paper and requires printing to take place in several stages.

The thermal printer in this U.S. Patent is arranged for production of multicolour data images on thermosensitive recording paper in response to the application of different temperatures thereto and comprises thermal printing heads arranged in juxtaposition to a path traversed by said paper and including a plurality of heating elements and capable of printing on the paper over the entire width thereof whilst being kept in contact therewith during its unidirectional motion, first and second print buffer means for accumulating data to be printed in a basic colour and a second colour distinctive from said basic colour respectively and for feeding print data to control energisation of the heating elements of the thermal head, control circuit means for controlling the output of each of said buffer means and for controlling the temperature of printing of said printing head by providing a first printing temperature for the contents of said first print buffer means applicable to data of said basic colour, and providing a second printing temperature for the contents of the second print buffer means applicable to the data of said distinctive colour, said control means having connected thereto a current-on time control circuit arranged to control the current-on time of a constant current to the heating elements of the thermal printing heads in respect of said first and said second print buffer means. This known device uses two printing heads.

It is the main object of the present invention to emphasise portions in any character which is printed in a particular colour different from an ordinary colour, while using one print head only. This object is achieved by the features claimed in claim 1.

In accordance with the present invention the recording paper which may be a label carried on a support or backing sheet, has a multi-colour forming temperature characteristic. The printing means is a single thermal head containing a multiplicity of heating elements and capable of printing the recording paper over the entire width thereof while being kept in contact therewith during the unidirectional motion. The print buffers are arranged for feeding print data to control energization of the heating elements of the thermal head, and a current on-time control circuit differentially sets the on-time periods of a constant current to the heating elements of the thermal head in response to selection of the print buffers. This selection is on the basis that a basic colour for general print data is formed at a low temperature while a different particular colour for specific print data is formed at a high temperature in a printing operation on the recording paper by the heating elements of the thermal head. In addition, the said current-on time control circuit is arranged to control the current-on time of a constant current to the heating elements of the thermal printing head in respect of the second print buffer means containing data to be printed in said distinctive colour, in such a manner that each horizontal line segment of each character transverse to the direction of paper feed is printed thicker in width than line segments of characters in line with the paper feed direction by allowing the current-on period to extend over several lines of individual print dots which follow one after the other in the dicection of paper feed thereby producing printed characters in said distinctive colour having both thin and thick portions to emphasise the characters printed in said distinctive colour.

Following is a description by way of example only and with reference to the accompanying drawings in methods of carrying the invention into effect.

In the drawings:—

Figure 1 is a plan view of an exemplary label printed by the present invention.

Figure 2 is a side view of a partial mechanism.

Figure 3 is a block diagram of electric circuits, and

Figure 4 is a timing chart.

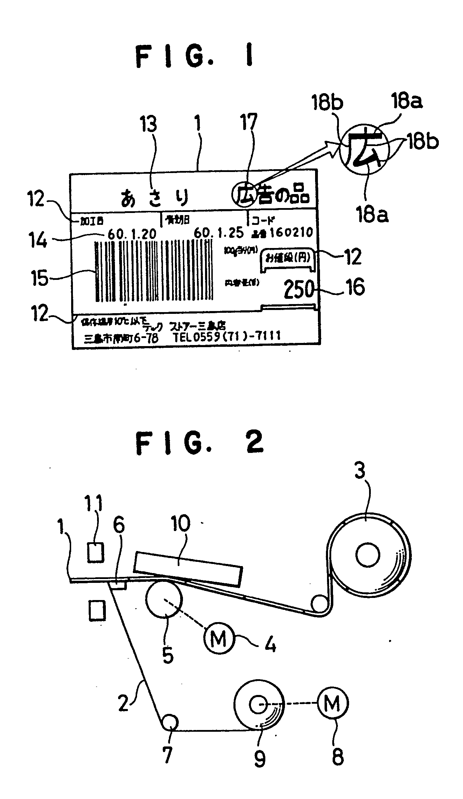

Hereinafter an exempary embodiment of the present invention will be described with reference to the accompanying drawings. First, as illustrated in Figure 2, rectangular labels 1 of recording paper are attached at spaced intervals on a longitudinal carrier sheet 2 which is wound on a roll 3. The sheet 2 is advanced via a platen 5 driven by a pulse motor 4, and is bent about a label stripper plate 6 and then is wound, by way of a roller 7, around a takeup spool 9 rotated by a takeup motor 8. A thermal printer head 10 is located juxtaposed platen 5, and the label 1 separated by the label stripper plate 6 is forwarded to a label detector 11, which then detects the presence or absence of the label 1 photoelectrically while simultaneously detecting the passage and hence the time of passing of its leading edge.

Figure 1 shows exemplary contents printed on the label 1. Some information 12 may be preprinted thereon, such information may include production data, efficacy data, code, article number, unit price per 100 g, quantity (g) shop name, partition line (printed in, e.g. blue); and price (printed in, e.g. white on red ground). In addition thereto, specific information 17 including article name 13, date 14, bar code 15, data 16, "advertising data" and so forth is printed by the thermal head 10. The "advertising data" in the specific information 17 is the portion to be emphasized in this embodiment, and it is printed by the undermentioned means in a particular colour which is different from the colour of the other printed portions. In further detail, the label 1 has, on its surface, two colour forming layers with dichromatic temperature characteristics in which the upper layer is used for a basic colour such as black while the lower layer is used for a different particular colour such as red. In this example, when the current supplied to the heating elements of the thermal head 10 is kept constant, the basic colour (black) is formed on the label 1 in a low temperature mode during which the current on-time is short, and the particular colour (red) is formed in a high temperature mode during which the current on-time is long.

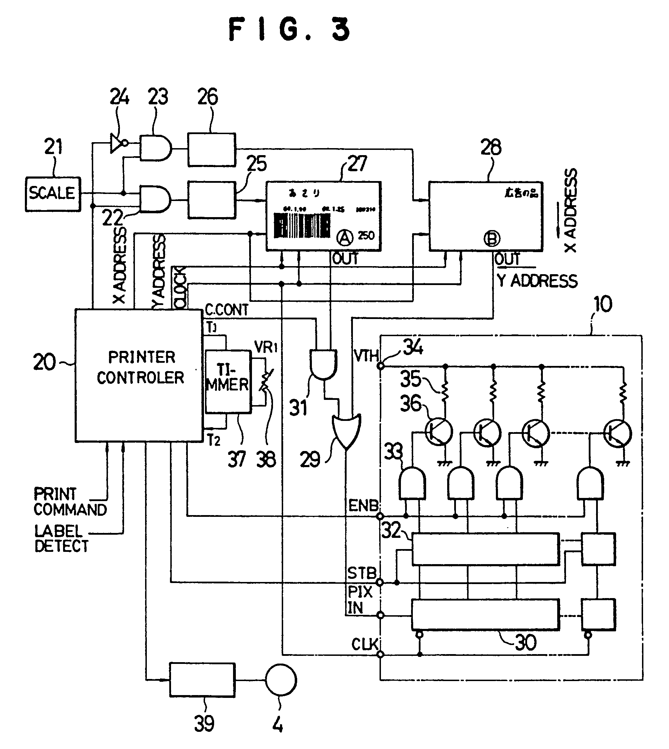

The electric circuit configuration is shown in Figure 3 in which printer controller 20 is so incorporated as to operate in response to a print command or to a label detection signal. A scale 21 is connected to one input of each of two AND gates 22 and 23, and the controller 20 is connected either directly or through an inverter 24 to another input of each of the AND gates 22 and 23. A first print buffer 27 and a second print buffer 28 are connection via character generator converters 25 and 26 respectively to the outputs of the AND gates 22 and 23. The controller 20 is further connected via an X address line, a Y address line and a clock line to both the print buffers 27 and 28.

The second print buffer 28 is connected via an OR gate 29 to a shift register 30 in the thermal head 10. Meanwhile the first print buffer 27 is connected to the input of an AND gate 31 together with a colour control signal (C. CONT) obtained from the printer controller 20, and the AND gate 31 is connected to the OR gate 29.

In the internal structure of the thermal head 10, the following operation is performed. First, data of the print buffers 27 and 28 are inputted bit by bit to shift register 30 by the use of clock pulses (CLK), and the content of the shift register 30 is transferred bit by bit to a latch circuit 32, which is connected in parallel thereto, by the use of a strobe signal (STB). To the latch circuit 32 are connected AND gates 33 which control the current fed to the heating elements 35 connected in common to a power supply 34 via respective amplifiers 33. The AND gates 33 are opened by an enable signal (ENB).

A timer 37 serving as a current on-time control circuit is connected to the printer controller 20. The timer 37 is started in response to a signal representative of a time T1 and functions to determine a time T2, during which the contents of both the first print buffer 27 and the second print buffer 28 are printed simultaneously, as will be described later. A variable resistor 38 is connected to the timer 37 for adjusting the time T2.

Furthermore, a motor driver 39 coupled to the pulse motor 4 is connected to the printer controller 20 so as to control the forward motion of the label 1.

In the structure mentioned above, a strobe signal STB and an enable signal ENB are generated respectively at the rise of T1 and the rise of T2. Assume now that the period T1 corresponds to the time required for printing one line in a different particular colour on the label 1, and the pulse motor 4 is driven cyclically per T1 to feed the label 1 by one line. It is defined here that "one-line printing" relates to one line of unitary dots, not to one line of characters. The time T2 is determined by the timer 37, and the period T1 is divided into the time T2 and the time (T1−T2). It is supposed here that the output of the timer 37 is turned to a high level after the lapse of T2 from the start of T1.

The printing operation will be described below with the first print buffer 27 referred to as Ⓐ memory and the second print buffer 28 as Ⓑ memory. Regarding the contents stored in the Ⓐ and Ⓑ memories, X addresses denote those for individual lines, and Y addresses denote those in each line. Consequently, the print contents of 0, 1, 2,...Y, Y are existent in each of the X addresses.

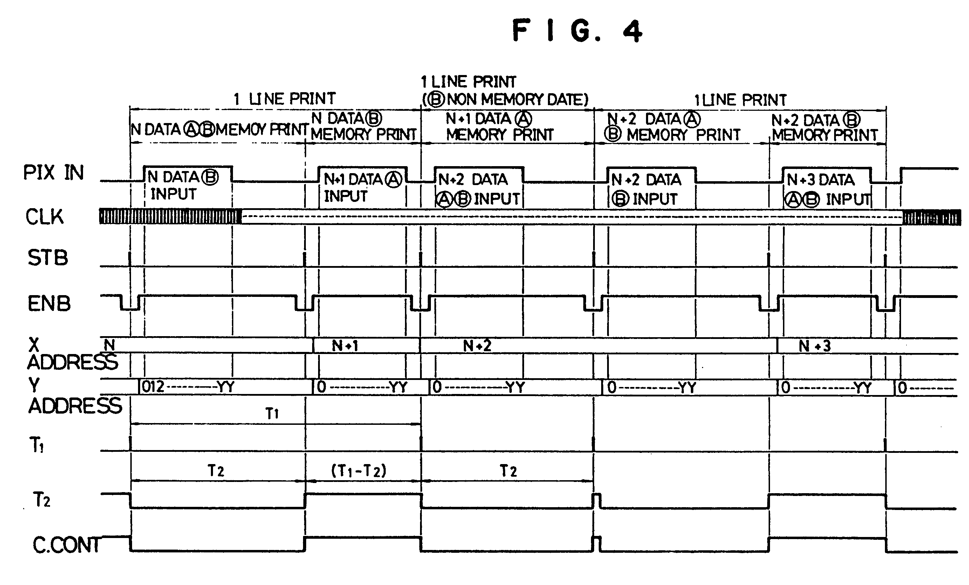

Referring now to the timing chart of Figure 4, the operation starts from "N DATA Ⓐ Ⓑ MEMORY PRINT". In this portion, the heating elements 35 begin to be energized according to the data already inputted to the shift register 30 in response to the STB signal and the ENB signal based on T1. Since T2 is still at a low level in this stage, the C, CONT signal also remains at a low level and therefore so serves as not to feed the output of the Ⓐ memory to the thermal head 10. Consequently, at this moment, input data to the thermal head 10 is merely the content of the Ⓑ memory, and the content actually printed is based on the data inputted immediately anterior to this stage.

After the lapse of the time T2, the content of the Ⓑ memory inputted to the shift register 30 is then applied to the latch circuit 32 to energize the heating elements 35. Consequently the content of the Ⓑ memory inputted previously is printed.

Since T2 is at a high level, the C. CONT signal is also at a high level so that the data from both the Ⓐ and Ⓑ memories are inputted to the shift register 30 in the thermal head 10.

The label 1 fed by one line cyclically in the period T1 receives the combined contents of the Ⓐ and Ⓑ memories and the content of the Ⓑ memory alternately within the time length divided into a time (T1−T2) and a time T2, and is so processed as to print the received contents sequentially. Since the current on-time for energization including merely T2 becomes short to induce a low temperature, the content for the general print data such as the article name 13 stored in the Ⓐ memory is printed in the basic colour (black). Meanwhile, the specific information 17 of "advertising data" in the content of the Ⓑ memory is printed in the different particular colour (red) as the heating elements 35 are energized for the time T1 which is long to induce a high temperature. Thus, the resultant colour comes to be different from the other information such as the article name 13 and so forth which are printed only within the short energization time T2, whereby the specific information 17 is rendered distinguishable with remarkable definition.

The operation described above is performed relative to the print line including the specific information 17 which is to be printed in the different particular colour. In this embodiment, the print time is shortened for any print line of the bar code or the like where none of the different particular colour is required, as shown in the second one-line print portion in Figure 4.

It corrsponds to the case where none of the specific information 17 is stored in the related Ⓑ memory, and the date is stored merely in the Ⓐ memory alone. Then, prior to lapse of the time T1, the current is supplied during the time T2 required for printing the article name 13 and so forth and, posterior to the basic colour (black) print line, a pulse of T1 is outputted for printing the next line. Therefore, the required print time is shortened in the line without any of the specific information 17 to consequently reduce the entire label issuing time, hence enhancing the operational efficiency thereof. In other words, the current on-time corresponding to the print time is extended in this embodiment only for the line requiring print in the different particular colour.

In a practical operation, the variable resistor 38 is adjusted properly to change the time T2. Such adjustment is executed in accordance with the paper quality of the label 1 and so forth.

In this examplary embodiment, the red emphatic print of characters representing "advertising data" is so contrived that the character pattern thereof has a feature as shown in Figure 1 with its enlarged view enclosed with a circle. In Figure 1, an arrow indicates the label feed direction (subscanning direction), and each of horizontal line segments 18a transverse to the label feed direction is set to be thick. A vertical line segment 18b extending along the label feed direction may be shaped to have an adequate width. Supposing now that the characters of the specific information 17 representing "advertising data" are of a Ming-style pattern, then the horizontal line segment 18a is as thin as a one-dot line, so that thermal energy from the heating elements 35 is prone to be insufficient for bringing out a desired red colour. Meanwhile the vertical line segment 18b is printable in red as desired since it is subjected to a sufficient amount of heat derived from continuous energization in the label feed direction. According to the present invention where the horizontal line segment 18a of the character pattern is set to be thick in width, it is successively subjected to a sufficient amount of thermal energy that is generated from the heating elements 35 and is transmitted over several lines (as opposed to a single line) at a high temperature particular colour print mode, whereby a satisfactory red colour is obtainable to accomplish distinct red print of the specific information 17. To the contrary, the vertical line segment 18b may be thin since the extension thereof is coincident with the label feed direction as described above, and therefore it is printable in red due to continuous exposure to the thermal energy.

Although in the above embodiment the "advertising data" is selectively printed in a different particular colour as the specific information 17, such particular colour printing may also be performed under the condition that individual items of various print groups (peculiar information 12) determined by preprinting on the label 1 are selectable with mutual combination. In a modification of using a non-preprinted label 1, the peculiar information 12 including a production data and so forth may be printed in a different particular colour by the thermal head 10 in the same manner as the aforementioned, while the general data including an article name 13 and so forth may be printed in a basic colour. Furthermore, when the characters such as "advertising data" to be emphasized are printed on a preprinted label 1, as already described in connection with the foregoing embodiment, a sum (price) calculated from (scaled weight) × (unit price) may be printed in the different particular colour to become conspicuous. Especially when the unit price is low as in this exemplary embodiment where the emphasized message includes "advertising data", it is preferred that the unit price be printed in the different particular colour (red). A satisfactory result is attainable when the horizontal line segments of such character pattern to be printed in the particular colour are set to be thick in width. In such particular-colour printing operation, flags (e.g. red=1, black=0) for selecting a red print mode or a black print mode may be previously stored in flag memories by a keyboard or flag setting commands with respect to the individual items of article name, auxiliary characters (e.g. advertising data), weight and price. In the stage of preparing memory data to be stored in the print buffers 27 and 28, black-forming data may be produced for the print buffer 27 and red-forming data for the print buffer 28 respectively in accordance with such selection flags.

## Claims

1. A thermal print for producing multicolour data images on thermosensitive recording paper in response to the application of different temperatures thereto produced by a thermal printing head arranged in juxtaposition to a path traversed by said paper (1) and including a plurality of heating elements (35) and capable of printing on the paper over the entire width thereof while being kept in contact therewith during its unidirectional motion, first and second print buffer means (27, 28) for accumulating data to be printed in a basic colour and a second colour distinctive from said basic colour respectively and for feeding print data to control energisation of the heating elements (35) of the thermal head, control circuit means (20) for controlling the output of each of said buffer means and for controlling the temperature of printing of said printing head by providing a first printing temperature for the contents of said first print buffer means applicable to data of said basic colour, and providing a second printing temperature for the contents of the second print buffer means applicable to data of said distinctive colour, said control means (20) having connected thereto a current-on time control circuit (37) arranged to control the current-on time of a constant current to the heating elements (35) in respect of said first and said second print buffer means, characterised in that, as for the data accumulated in said second print buffer means, the control circuit (37) controls said second buffer means to such a manner that each horizontal line segment of each character transverse to the direction of paper feed is printed thicker in width than line segments of characters in line with the paper feed direction by allowing the current-on period to extend over several print lines of individual print dots which follow one after the other in the direction of paper feed thereby, while using a single printing head, producing printed characters in said distinctive colour having both thin and thick portions to emphasise the characters printed in said distinctive colour.

2. A thermal printer as claimed in Claim 1 wherein magazine means is provided for the supply of the recording paper to the thermal printing head, the recording paper being in the form of individual labels carried on a backing sheet and said recording paper having preprinted characters (12) thereon and desired print contents being selectively printable in the different particular colour with respect to the individual items of various print groups determined by such preprinting.

3. A thermal printer as claimed in Claim 1 wherein horizointal line segments of characters to be emphasised are arranged to be thick in width, flags for selecting a basic colour mode or a distinctive colour mode being stored in flag memories by means of a keyboard or flat setting commands and during the preparation of memory data to be stored in the print buffer means (27, 28), basic colour data being produced for said first buffer means (e.g. 27), and distinctive colour data being produced for the second buffer means (e.g. 28) respectively, according to the flag selection.

## Patentansprüche

1. Thermodrucker zum Erzeugen mehrfarbiger Datenbilder auf thermoempfindlichem Auszeichnungspapier in Abhängigkeit von der Zuführung unterschiedlicher Temperaturen dazu, die von einem Thermodruckkopf erzeugt werden, der benachbart einem von dem Papier (1) durchlaufenen Weg angeordnet ist und der mehrere Heizelemente (35) enthält und in der Lage ist, das Papier auf seiner gesamten Breite zu bedrucken, während er bei seiner unidirektionalen Bewegung damit in Berührung gehalten wird, mit ersten und zweiten Druckpuffereinrichtungen (27, 28) zum Ansammeln von Daten, die in einer Grundfarbe und in einer zweiten, sich von der Grundfarbe unterscheidenden Farbe zu drucken sind, und zum Zuführen von Druckdaten zur Steuerung der Energieversorgung der Heizelemente (35) des Thermokopfes, einer Steuerschaltungseinrichtung (20) zum Steuern des Ausgangs einer jeden der Puffereinrichtungen und zum Steuern der Drucktemperatur des Druckkopfes durch Erzeugen einer ersten Drucktemperatur für den Inhalt der ersten Druckpuffereinrichtung für die Daten der genannten Grundfarbe und zum Erzeugen einer zweiten Drucktemperatur für den Inhalt der zweiten Druckpuffereinrichtung für die Daten der genannten anderen Farbe, welche Steuereinrichtung (20) mit einer Stromeinschaltzeitsteuerschaltung (37) verbunden ist, die dazu eingerichtet ist, die Stromeinschaltzeit eines konstanten Stromes an den Heizelementen (35) in Bezug auf die ersten und zweiten Druckpuffereinrichtungen zu steuern, dadurch gekennzeichnet, daß hinsichtlich der in der zweiten Druckpuffereinrichtung angesammelten Daten die Steuerschaltung (37) die zweite Puffereinrichtung derart steuert, daß jedes Horizontalzeilensegment eines jeden Zeichens quer zur Richtung der Papierzuführung in der Breite dicker gedruckt wird, als Zeilensegmente von Zeichen in Linie mit der Papierzuführrichtung, indem zugelassen wird, daß die Stromeinschaltzeit sich über mehrere Druckzeichen einzelner Druckpunkte ersterckt, die dadurch einander in der Richtung der Papierzuführung folgen, wobei ein einziger Druckkopf verwendet wird, der Druckzeichen in der genannten abweichenden Fabre erzeugt, die sowohl dünne als auch dicke Abschnitte aufweisen, um die Zeichen hervorzuheben, die in der abweichenden Farbe gedruckt werden.

2. Thermodrucker nach Anspruch 1, bei dem eine Magazineinrichtung für die Zuführung des Aufzeichnungspapiers zu dem Thermodruckkopf vorgesehen ist, das in Form einzelner Etiketten vorliegt, die auf einem Trägerblatt angeordnet sind, wobei das Aufzeichnungspapier vorgedruckte Zeichen (12) trägt und gewünschte Druckinhalte selektiert in der abweichenden speziellen Farbe in Bezug auf die individuellen Gegenstände verschiedener Druckgruppen, die durch dieses Vordrucken bestimmt sind, druckbar sind.

3. Thermodrucker nach Anspruch 1, bei dem horizontale Zeilensegmente von hervorzuhebenden Zeichen dazu eingerichtet sind, in der Breite fett zu sein, wobei Kennzeichnen zum Auswählen einer Grundfarbbetriebsart oder einer bestimmten Farbbetriebsart in Kennzeichenspeichern mittels einer Tastatur oder Kennzeicheneinstellbefehlen und während der Vorbereitung von in die Druckpuffereinrichtungen (27, 28) zu speichernden Speicherdaten gespeichert werden, wobei Grundfarbdaten für die genannte erste Puffereinrichtung (z.B. 27) erzeugt werden und bestimmte Farbdaten für die zweite Puffereinrichtung (z.B. 28) entsprechend der Kennzeichenauswahl erzeugt werden.

**Revendications**

1. Imprimante thermique pour produire des images de données multicolores sur un papier d'enregistrement thermosensible en réponse à l'application de températures différentes sur ce dernier, produites par une tête d'impression thermique placée en juxtaposition d'un parcours suivi par ledit papier (1) et comprenant plusieurs éléments chauffants (35) et capable d'imprimer sur le papier sur la totalité de sa largeur tout en étant maintenu en contact avec lui pendant son mouvement unidirectionnel, des premiers et seconds moyens à tampon d'impression (27, 28) pour accumuler des données à imprimer dans une couleur de base et une seconde couleur distincte de ladite couleur de base respectivement, et pour envoyer les données d'impression pour commander l'excitation des éléments chauffants (35) de la tête thermique, des moyens à circuit de commande (20) pour commander la sortie de chacun desdits moyens à tampon et pour commander la température d'impression de ladite tête d'impression en fournissant une première température d'impression pour le contenu desdits premiers moyens à tampon applicable aux données dans ladite couleur de base, et fournissant une seconde température d'impression pour le contenu des seconds moyens à tampon d'impression applicable aux données dans ladite couleur distincte, lesdits moyens de commande (20) étant reliés à un circuit de commande des périodes d'application du courant (37) aménagé pour commander la durée d'application d'un courant constant aux éléments chauffants (35) en fonction desdits premiers et seconds moyens à tampon d'impression, caractérisée qu'en ce qui concerne les données accumulées dans lesdits seconde moyens à tampon d'impression, le circuit de commande (37) commande lesdits seconds moyens à tampon d'impression de manière que chaque segment de ligne horizontal de chaque caractère qui est transversal à la direction de l'avance du papier soit imprimé de façon plus épaisse en largeur que les segments de lignes de caractères en ligne avec la direction de l'avance du papier en permettant à la durée d'application du courant de s'étendre sur plusieurs lignes d'impression de points d'impression individuels qui se suivent les unes les autres dans la direction de l'avance du papier, tout en n'utilisant qu'une unique tête d'impression, produisant des caractères imprimés dans ladite couleur distincte comportant à la fois des portions minces et des portions épaisses pour mettre en valeur les caractères imprimés dans ladite couleur distincte.

2. Imprimante thermique selon la revendication 1, dans laquelle des moyens à magasin sont prévus pour l'alimentation du papier d'enregistrement vers la tête d'impression thermique, le papier d'enregistrement se présentant sous la forme d'étiquettes individuelles supportées sur une feuille de support et ledit papier d'enregistrement comportant des caractères préimprimés (12), et le contenu d'impression désiré pouvant être imprimé sélectivement dans la couleur particulière différente de celle des éléments individuels de divers groupes d'impression déterminés par cette préimpression.

3. Imprimante thermique selon la revendication 1, dans laquelle des segments de ligne horizontaux de caractères à mettre en valeur sont prévus pour être de largeur épaisse, des drapeaux pour sélectionner un mode en couleur de base ou un mode en couleur distincte étant stockés dans des mémoires de drapeaux au moyen d'un clavier ou de commandes d'établissement de drapeau et pendant la préparation des données de mémoire à stocker dans les moyens à tampon d'impression (27, 28), des données de couleur de base étant produites par lesdits premiers moyens à tampon d'impression (par exemple 27) et des données de couleur distincte étant produites pour les seconds moyens à tampon (par exemple 28) respectivement, en fonction de la sélection du drapeau.

# FIG. 1

# FIG. 2

# FIG. 3

# F I G. 4

EP 0 193 343 B1

1 LINE PRINT (Ⓑ NON MEMORY DATE)

1 LINE PRINT

1 LINE PRINT

N DATA ⒶⒷ MEMORY PRINT
N DATA Ⓑ MEMORY PRINT
N+1 DATA Ⓐ MEMORY PRINT
N+2 DATA Ⓐ Ⓑ MEMORY PRINT
N+2 DATA Ⓑ MEMORY PRINT

PIX IN
N DATA Ⓑ INPUT
N+1 DATA Ⓐ INPUT
N+2 DATA ⒶⒷ INPUT
N+2 DATA Ⓑ INPUT
N+3 DATA ⒶⒷ INPUT

CLK

STB

ENB

X ADDRESS
N    N+1    N+2    N+3

Y ADDRESS
012------YY    0--------YY    0---------YY    0-----------YY    0-----------YY    0--------

$T_1$
$T_1$

$T_2$
$T_2$    ($T_1 - T_2$)    $T_2$

C.CONT